# EUROPEAN PATENT APPLICATION

(11) **EP 3 838 393 A1**
(43) Date of publication of application: **23.06.2021**
(21) Application number: 19217995.0
(22) Date of filing: 19.12.2019
(51) Int. Cl.: B01J 7/00, B01J 12/00, B01J 19/30

(54) **PROCESS FOR THE OXIDATION OF SULFUR DIOXIDE TO SULFUR TRIOXIDE INVOLVING A STRUCTURED CATALYST BED**

(71) Applicant: BASF SE, 67056 Ludwigshafen am Rhein (DE)
(72) Inventor: KENNEMA, Marco Oskar, 67056 Ludwigshafen (DE); WALSDORFF, Christian, 67056 Ludwigshafen (DE); GROBYS, Mauricio, 200137 Shanghai (CN); HENSEL, Dirk, 67056 Ludwigshafen (DE); BORNINKHOF, Fred, 3454 PK De Meern (NL)
(74) Representative: Schuck, Alexander

(57) **Abstract**

Disclosed herein is a process for the oxidation of sulfur dioxide to sulfur trioxide, wherein a feed gas mixture comprising oxygen and sulfur dioxide is passed at a temperature in the range of from 280°C to 650°C through one or more catalyst beds of shaped catalyst bodies made of a catalyst material comprising vanadium on a support material, wherein at least one catalyst bed comprises at least two different layers of randomly packed shaped catalyst bodies of the catalyst material, a first layer having a higher geometric surface area per reactor volume than a second layer, the first layer being placed upstream to the second layer with respect to the direction of the gas flow.

## Description

The invention concerns a process for the oxidation of sulfur dioxide to sulfur trioxide involving a structured catalyst bed and a reactor for the oxidation of sulfur dioxide to sulfur trioxide containing a structured catalyst bed.

Sulfur trioxide can be used in chemical industry for sulfonation processes. However, the majority of sulfur dioxide oxidation is used to provide sulfur trioxide for making sulfuric acid. Sulfuric acid is obtained virtually exclusively by oxidation of sulfur dioxide (SO₂) to sulfur trioxide (SO₃) in the contact/double contact process with subsequent hydrolysis. In this process, SO₂ is oxidized by means of molecular oxygen over vanadium-comprising catalysts in a plurality of consecutive adiabatic layers (beds) to form SO₃. Part of the sulfur dioxide is reacted in the individual beds, with the gas being in each case cooled between the individual beds (contact process). SO₃ which has already been formed can be removed from the gas stream by intermediate absorption in order to achieve higher total conversions (double contact process). The reaction occurs, depending on bed, in a temperature range from 340°C to 680°C, with the maximum temperature decreasing with increasing bed number because of the decreasing SO₂ content.

Oxidation of SO₂ to SO₃ in the first catalyst bed results in the generation of a substantial amount of heat which is removed by passing the gas exiting the first stage through an external heat exchanger, typically a waste heat boiler. Gas exiting the exchanger is returned to the converter and passed through the second catalyst bed where further oxidation of SO₂ to SO₃ takes place. Gas leaving the second catalyst bed is removed from the converter, passed through another heat exchanger, typically a waste heat boiler. Gas exiting the exchanger is returned to the converter and passed through the third catalyst bed where further oxidation of SO₂ to SO₃ takes place. Gas leaving the third catalyst bed is removed from the converter and passed through an inter-bed absorption tower wherein the SO₃ contained in the gas is absorbed in sulfuric acid. Gas leaving the inter-bed tower contains unreacted SO₂ and O₂, and further oxidation of SO₂ to SO₃ is effected by returning the gas to the converter and passing it through the fourth catalyst bed. The fourth stage catalyst bed can comprise a particulate vanadium catalyst, preferably a Cs-doped vanadium catalyst. In the fourth bed, residual SO₂ is converted to SO₃, after which the gas is passed through a final absorption tower where the SO₃ remaining is absorbed in sulfuric acid.

Modern-day commercial catalysts usually comprise not only vanadium, but also alkali metal compounds, especially potassium compounds, but optionally also sodium compounds and/or cesium compounds, and also sulfate. As supports for the abovementioned components, porous oxides, in particular silicon dioxide, SiO₂, are usually used. Under reaction conditions, an alkali metal pyrosulfate melt in which the active component vanadium is dissolved in the form of oxo-sulfate complexes is formed on the support material (Catal. Rev. - Sci. Eng., 1978, vol. 17(2), pages 203 to 272). This is referred to as a supported liquid phase catalyst.

The production of such catalysts on an industrial scale is usually carried out by mixing of aqueous solutions or suspensions of the various active components, for example appropriate vanadium compounds (V₂O₅, ammonium polyvanadate, ammonium metavanadate, alkali metal vanadates or vanadyl sulfates) with alkali metal salts (nitrates, carbonates, oxides, hydroxides, sulfates), sometimes together with sulfuric acid and other components which can function as pore formers or lubricants, for example sulfur, starch or graphite, with the support material. The composition resulting therefrom is processed to form the desired shaped bodies in the next step and finally treated thermally (drying and calcination).

US 4,485,190 describes the production of a catalyst for the oxidation of SO₂ to SO₃, which comprises V, K and a silicon oxide compound. As shaped bodies, mention is made in column 2, lines 30 ff. and column 5, lines 62 ff. of, inter alia, trilobes.

DE 689 19 235 T2 describes a catalyst for the oxidation of SO₂ to SO₃, which comprises vanadium and potassium and a silicon oxide compound. On page 2, lines 2 ff., hollow or compact cylinders, multiply lobed cylinders, optionally with spiral depressions, are proposed as shaped bodies.

WO 2017/055565 A1 discloses a method of building a bulk catalytic structure by shaping a composition comprising a ceramic material to obtain a green structure, firing the green structure to obtain the bulk catalytic structure, wherein the structure comprises first channels having a length extending in a flow direction and second channels having a length extending in a radial direction, wherein the shaping step comprises extruding the suspension, slurry or paste as fibers by three-dimensional fiber deposition, wherein the fibers form a layered network. The layered network comprises alternating layers of fibers parallel to one another, wherein the fibers in successive layers are arranged orthogonal or oblique to one another.

Catalysts prepared by robocasting are also disclosed in WO 2018/099957 A1.

Catalyst beds used for the conversion of SO₂ to SO₃ usually contain catalyst shaped bodies of uniform geometry. Examples are 7 point star-ring catalysts, 6 point star-ring catalysts and 5 point star-ring catalysts.

The catalyst bodies are usually employed with two different chemical compositions wherein the major difference is the amount of cesium in the active phase of the catalyst. The increased cesium concentration decreases the temperature at which the vanadium salt melts which is required for the catalytic activity for conversion of SO₂ to SO₃. The point at which the catalytic activity of the active phase results in a measurable increase in temperature of the gas over the catalyst bed is considered the ignition temperature of the catalyst. The ignition temperature of the cesium-promoted catalyst is typically 20-40°C lower than the ignition temperature of the vanadium catalyst without cesium promotion. Due to the higher cost of the cesium-promoted catalyst the catalyst is used as an ignition layer, wherein the cesium-promoted vanadium catalyst is placed at the inlet of the gas flow into the reactor to take advantage of the low ignition temperature. After the increase in temperature of the inlet gas through the cesium-promoted layer a second catalyst type is used which has a lower or in some cases no cesium promotion. This second layer has an active range which begins at the temperature of the gas leaving the cesium promoted layer. In this way the advantage of the cesium type catalyst is realized at a fraction of the cost of a full cesium promoted reactor filling.

E. Zabar and M. Sheintuch (1982): Optimization of an autothermal monolithic reactor-heat exchanger for SO2 oxidation over platinum, Chemical Engineering Communications, 16:1-6, 313-323 discusses the use of a platinum monolith structure in a pre-reactor before a standard packed bed of vanadium-type catalysts, taking advantage of the high surface area of the monolith.

Indian Patent Application No. 2003/DEL/2015 discloses a catalyst consisting of vanadium, one or more alkali metals precipitated on the support, and an additional lanthanide promoter in order to achieve low ignition temperature and broad operational range. The use of lanthanides is cost intensive and a change in the surface area of the shape according to this invention provides a similar activity without changing the chemical composition.

JP 3314322 B2 describes an optimal range for geometric surface area to diameter of several shape geometries identifying that the geometric surface area of the catalyst has an impact on the catalyst activity.

US 5,264,200 relates to the catalytic oxidation of sulfur dioxide to sulfur trioxide using a monolithic or honeycomb catalysts for the oxidation reaction. The document describes the use of a platinum active phase in a series of catalytic stages prior to inter-bed absorption followed by a further pass through a final catalytic stage containing a cesium promoted vanadium type catalyst. The teaching of this document particularly relates to improved monolithic catalysts and to a sulfur acid manufacturing process in which monolithic catalysts are used in preliminary contact stages and a particulate catalyst is used in the final stage. The honeycombs have a high geometric surface area but are placed in a separate reactor and not in a structured bed.

In a state of the art structured catalyst bed for the conversion of SO₂ to SO₃, large rings with an outer diameter of 18 mm and a central hole with a diameter of 7 mm are placed above a package of standard ring with an outer diameter of 10 mm and a central hole with a diameter of 5 mm or standard star-rings of outer diameter 11 mm with a central hole with a diameter of 4 mm. The large rings are an example of a dust protection layer catalyst wherein the geometric surface area of the catalyst per volume of the reactor is smaller at the inlet of the reactor.

A cesium-promoted vanadium catalyst is placed at the inlet of the reactor to act as an ignition layer for the standard vanadium catalyst with no cesium promotion.

EP 3431178 A1 gives a detailed description of a state of the art structured packing of a reactor bed wherein a low geometric surface area catalyst is placed at the entrance of the first reactor bed in the direction of gas flow.

It is an object of the present invention to provide an improved process for the oxidation of sulfur dioxide to sulfur trioxide characterized by a low inlet temperature of the oxidation reactor. In particular, it is an object of the present invention to provide such a process which allows for the use of a higher inlet concentration of SO₂ while maintaining the outlet temperature of the reactor bed the same, and/or a higher total conversion of SO₂ to SO₃ without requiring the complete filling of a reactor bed with a more expensive, high geometric surface area catalysts.

It is a further object of the present invention to provide an improved process for the oxidation of sulfur dioxide to sulfur trioxide that allows to operate at higher concentration of sulfur dioxide in the feed gas and / or higher conversion of sulfur dioxide. Higher concentration of sulfur dioxide in the reaction gas may save compressor cost and increase space-time-yield productivity and thus plant capacity. Higher conversion of sulfur dioxide allows lower levels of unconverted sulfur dioxide which may have to be scrubbed from the vent stream consuming energy and chemicals or which would be otherwise vented to the atmosphere. It is therefore another object of the present invention to reduce potential sulfur dioxide emissions to the atmosphere in sulfur dioxide oxidation plants in an economically favorable way.

Oxidation of sulfur dioxide to sulfur trioxide is an equilibrium-limited reaction at elevated temperature. Under steady-state and adiabatic conditions the conversion of sulfur dioxide is thus limited by inlet temperature and heat capacity of the reaction gas. A lower inlet temperature of the reaction gas allows to increase SO₂ concentration for a given equilibrium conversion or to increase conversion at a given concentration of sulfur dioxide in the reaction gas.

The object is solved by a process for the oxidation of sulfur dioxide to sulfur trioxide, wherein a feed gas mixture comprising oxygen and sulfur dioxide is passed at a temperature in the range of from 280°C to 650°C through one or more catalyst beds of shaped catalyst bodies made of a catalyst material comprising vanadium on a support material, wherein at least one catalyst bed comprises at least two different layers of randomly packed shaped catalyst bodies of the catalyst material, a first layer having a higher geometric surface area per reactor volume than a second layer, the first layer being placed upstream to the second layer with respect to the direction of the gas flow. The reactor volume here is the volume consumed in the reactor by the first and the second layer, respectively, of randomly shaped catalyst bodies.

The object is further solved by a reactor for the oxidation of sulfur dioxide to sulfur trioxide having a gas flow inlet and a gas flow outlet, the reactor comprising one or more catalyst beds of shaped catalyst bodies made of a catalyst material comprising vanadium on a support material, wherein at least one catalyst bed comprises at least two different layers of randomly packed shaped catalyst bodies of the catalyst material, a first layer having a higher geometric surface area per reactor volume than a second layer, the first layer being placed upstream to the second layer with respect to the direction of the gas flow passing from the gas flow inlet to the gas flow outlet. The current invention relates to a structured packing of a catalyst for the conversion of SO₂ to SO₃ wherein a high geometric surface area catalyst precedes a low geometric surface area catalyst in the direction of gas flow through the reactor in at least part of the reactor bed. We have now found that the high geometric surface area catalyst allows for the decrease of the inlet temperature of the reactor while maintaining high catalytic activity for the conversion of SO₂ to SO₃. This allows for higher total conversions within one reactor bed while not increasing the outlet temperature of the reactor. By using a structured packing of the catalyst bed the advantages of the high geometric surface area catalyst can be realized without having the cost of a full reactor bed of high geometric surface area catalysts.

The structured packing of a catalyst bed for the conversion of SO₂ to SO₃ wherein the catalyst at the inlet of the gas flow into the reactor has a higher geometric surface area than the remainder of the catalyst bed may be combined with a cesium promoted catalyst type and a non-promoted catalyst type or could be conducted using only one type of catalyst.

The advantage of the low ignition temperature could be further combined with a dust protection layer. In this case the dust protection catalysts shaped bodies have a larger size and as a result a lower geometric surface area. In this situation the catalyst bed is structured wherein a low geometric surface area catalyst is at the inlet of the gas flow into the reactor followed by a high geometric surface area catalyst which is responsible for the ignition of the reaction gas and then followed by a low geometric surface area catalyst.

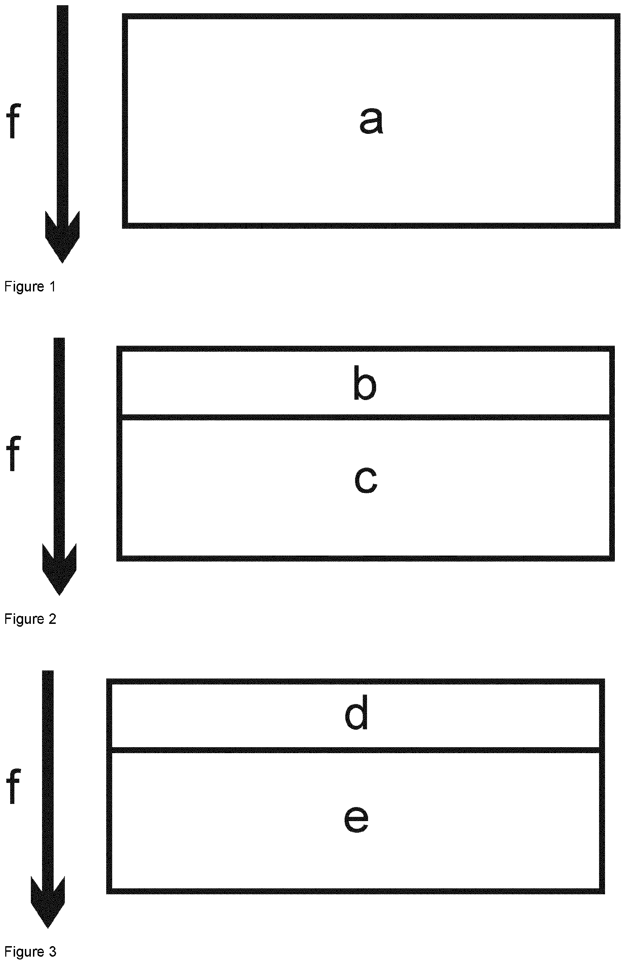

The invention is illustrated by Figures 1 to 12.
Figure 1 shows a state of the art catalyst bed wherein (a) the catalyst shape geometry is uniform throughout the entire catalyst bed with no structure filling of the randomly packed catalyst structures. An example of the catalyst type shown as (a) could be 5-point star-rings, 6-point star-rings, 7-point star-rings, cylinders, rings, gear-shapes, multi-lobed shapes, connected cylindrical rings and monolith type structures. (f) depicts the direction of the gas flow through the reactor bed.
Figure 2 shows a state of the art structured catalyst bed wherein (b) depicts a dust protection layer catalyst with a low geometric surface area per reactor volume (<400 m²/L) which is placed at the entrance of the reactor bed with respect to the gas flow through the reactor (f). The catalyst shape geometry depicted by (c) is uniform throughout the remainder of the catalyst bed with no structure filling of the randomly packed catalyst structures. An example of the catalyst type shown as (c) could be 5-point star-rings, 6-point star-rings, 7-point star-rings, cylinders, rings, gear-shapes, multi-lobed shapes, connected cylindrical rings and monolith type structures. The catalyst shape geometry (c) typically has a geometric surface area to reactor volume which is >400 m²/L.
Figure 3 shows a state of the art structured catalyst bed wherein (d) depicts a cesium-doped vanadium catalyst layer which is placed at the entrance of the reactor bed with respect to the gas flow through the reactor (f). The catalyst shape geometry depicted by (d) is equal to the shape depicted by (e) and the shape geometry of both the cesium-doped vanadium catalyst layer (d) and the undoped-vanadium type catalyst (e) are uniform throughout the catalyst bed with no structure filling with respect to the shape geometry of the randomly packed catalyst structures. An example of the catalyst type shown as (d) and (e) could be 5-point star-rings, 6-point star-rings, 7-point star-rings, cylinders, rings, gear-shapes, multi-lobed shapes, connected cylindrical rings and monolith type structures. The catalyst shape geometry (d) and (e) typically have a geometric surface area to reactor volume which is >400 m²/L.

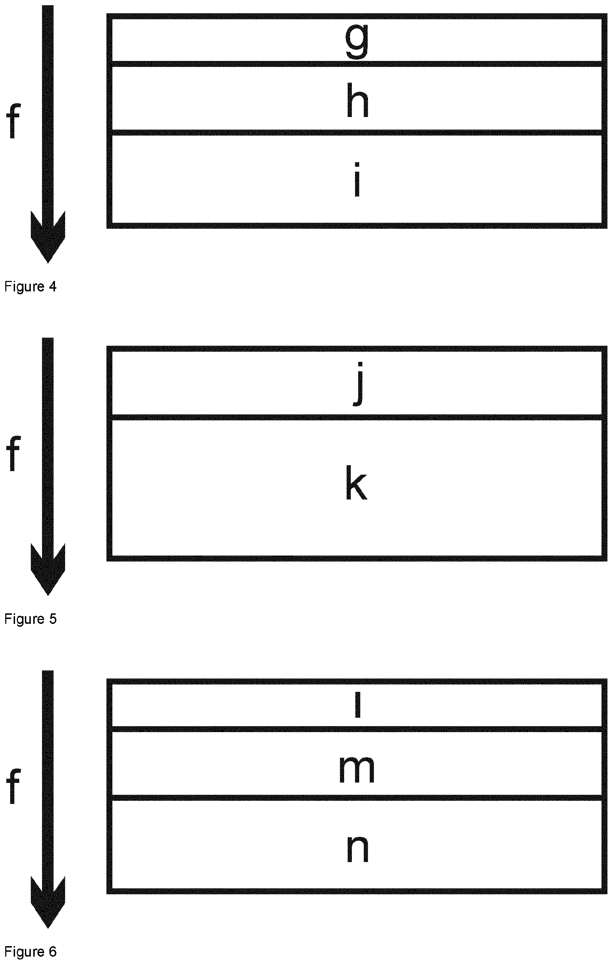

Figure 4 shows a state of the art structured catalyst bed wherein (g) depicts a dust protection layer catalyst with a low geometric surface area per reactor volume (<400 m²/L) which is placed at the entrance of the reactor bed with respect to the gas flow through the reactor (f). The catalyst shape geometry depicted by (h) is equal to the shape depicted by (i) and the shape geometry of both the cesium-doped vanadium catalyst layer (h) and the undoped-vanadium type catalyst (i) are uniform throughout the catalyst bed with no structure filling with respect to the shape geometry of the randomly packed catalyst structures in terms of section (h) and (i). An example of the catalyst type shown as (h) and (i) could be 5-point star-rings, 6-point star-rings, 7-point star-rings, cylinders, rings, gear-shapes, multi-lobed shapes, connected cylindrical rings and monolith type structures. The catalyst shape geometry (d) and (e) typically have a geometric surface area to reactor volume which is >400 m²/L.
Figure 5 shows a structured catalyst bed according to the invention wherein (j) depicts a layer of high geometric surface area to reactor volume catalyst type (>500 m²/L) which is placed at the entrance of the reactor bed with respect to the gas flow through the reactor (f). The catalyst shape geometry depicted by (k) has a geometric surface area to reactor volume which is lower than the catalyst layer (j). The catalyst shape geometries described by (k) are uniform throughout the section of the catalyst bed marked by (k) with no structure filling with respect to the shape geometry of the randomly packed catalyst structures in this section of the reactor bed. An example of the catalyst type shown as (k) could be 5-point star-rings, 6-point star-rings, 7-point star-rings, cylinders, rings, gear-shapes, multi-lobed shapes, connected cylindrical rings and monolith type structures. The catalyst shape geometry (k) typically has a geometric surface area to reactor volume which is at least 5% lower more preferably 10% lower than the catalyst shape geometry used in layer (j).
Figure 6 shows a structured catalyst bed according to the invention wherein (I) depicts a dust protection layer catalyst with a low geometric surface area per reactor volume (<400 m²/L) which is placed at the entrance of the reactor bed with respect to the gas flow through the reactor (f). The catalyst shape geometry (m) depicts a layer of high geometric surface area to reactor volume catalyst type (>500 m²/L) which is placed after the dust protection layer (I) with respect to the gas flow through the reactor (f). The catalyst shape geometry depicted by (n) has a geometric surface area to reactor volume which is lower than the catalyst layer (m). The catalyst shape geometries described by (n) are uniform throughout the section of the catalyst bed marked by (n) with no structure filling with respect to the shape geometry of the randomly packed catalyst structures in this section of the reactor bed. An example of the catalyst type shown as (n) could be 5-point star-rings, 6-point star-rings, 7-point star-rings, cylinders, rings, gear-shapes, multi-lobed shapes, connected cylindrical rings and monolith type structures. The catalyst geometry (n) typically has a geometric surface area to reactor volume which is at least 5% lower more preferably 10% lower than the catalyst shape geometry used in layer (m).

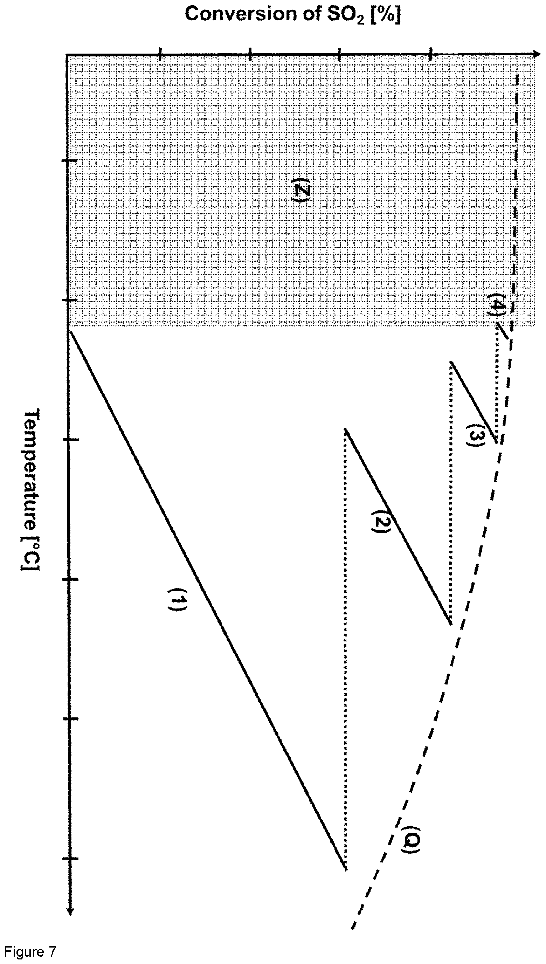

Figure 7 illustrates the conversion as a function of the increase in temperature during the conversion of SO₂ to SO₃ over a four-bed SO₂ converter wherein the catalyst filling of each bed is based on the state of the art catalyst loading described in Figure 1. The typical conversions for a state of the art reactor operating under standard conditions would result in a 50-67% conversion in the first reactor bed (1) followed by an intermediate cooling indicated by the horizontal dotted line. After the intermediate cooling the gas flow enters the second reactor bed (2) where the conversion is further increased to 70-85% conversion. This is again followed by a cooling of the gas stream prior to entering into the third reactor bed (3) where the conversion is typically higher than 95% conversion of SO₂ to SO₃. The gas is again cooled and in the fourth reactor bed (4) the conversion typically reaches higher than 98% conversion. The reaction is always thermodynamically limited by the equilibrium (Q) and the active temperature zone of the inventive catalyst layer is depicted by section (Z).

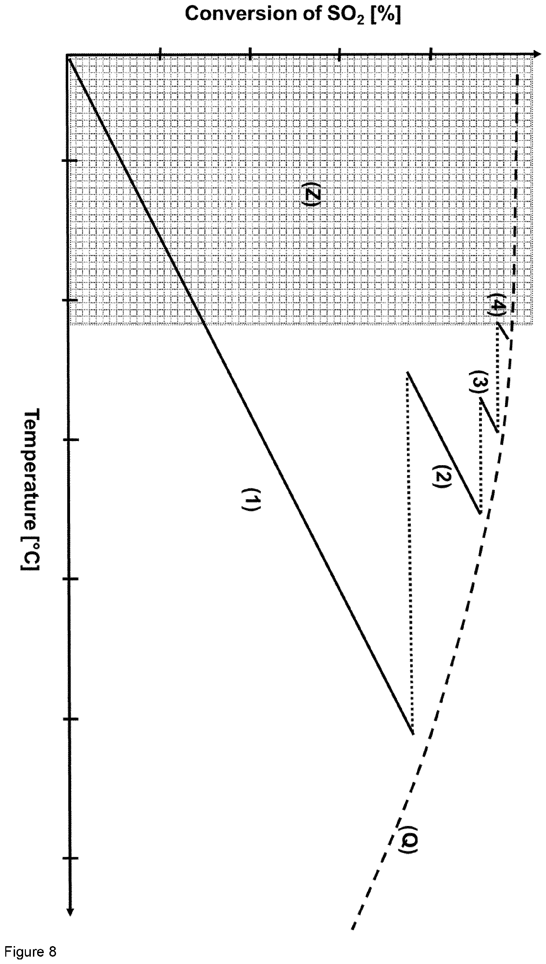

Figure 8 illustrates the conversion as a function of the increase in temperature during the conversion of SO₂ to SO₃ over a four-bed SO₂ converter wherein the catalyst filling is based on the use of the inventive catalyst loading in the first bed of the converter as described in Figure 5 and Figure 6 and the remaining beds (2), (3) and (4) are based on the state of the art packing described in Figure 1. In this case the conversion of SO₂ is significantly higher in bed 1 where the inventive layer contributes a significant percentage of the conversion in a temperature range that the standard catalyst shape geometry would not be active (Z). By achieving such a high conversion in the first reactor bed (1) a higher total conversion in the reactor can be achieved. The reaction is always thermodynamically limited by the equilibrium (Q) and the active temperature zone of the inventive catalyst layer is depicted by section (Z).

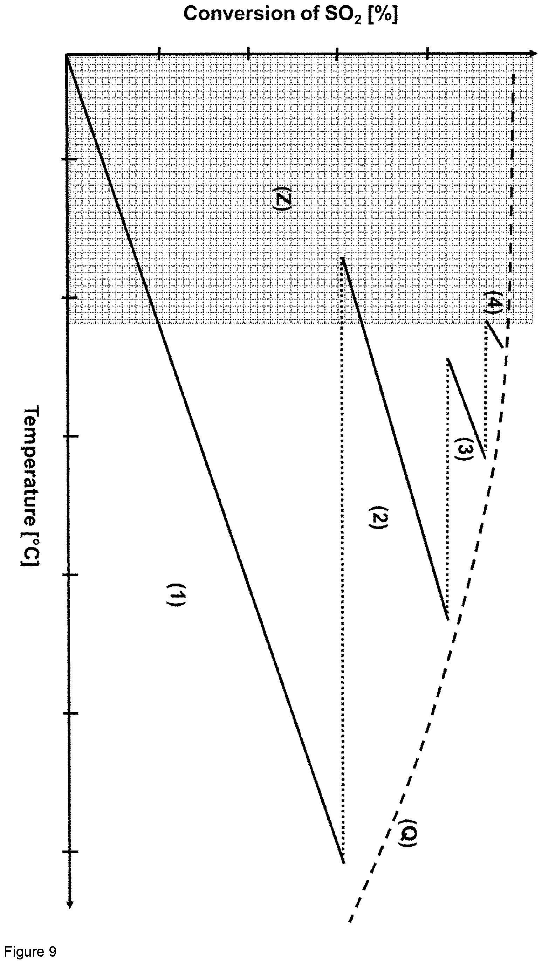

Figure 9 illustrates the conversion as a function of the increase in temperature during the conversion of SO₂ to SO₃ over a four-bed SO₂ converter wherein the catalyst filling is based on the use of the inventive catalyst loading in the first (1) and second bed (2) of the converter as described in Figure 5 and Figure 6, the remaining beds three (3) and four (4) are based on the state of the art filling of the reactor bed depicted in Figure 1 and the SO₂ concentration in the feed gas is higher than in the state of the art case (Figure 7). In this case the conversion of SO₂ is significantly higher in bed 1 where the inventive layer contributes a significant percentage of the conversion in a temperature range that the standard catalyst shape geometry would not be active (Z). This allows for a higher total conversion of SO₂ to SO₃ without changing the outlet temperature of the reactor bed under the state of the art loading conditions. The reaction is always thermodynamically limited by the equilibrium (Q) and the active temperature zone of the inventive catalyst layer is depicted by section (Z).

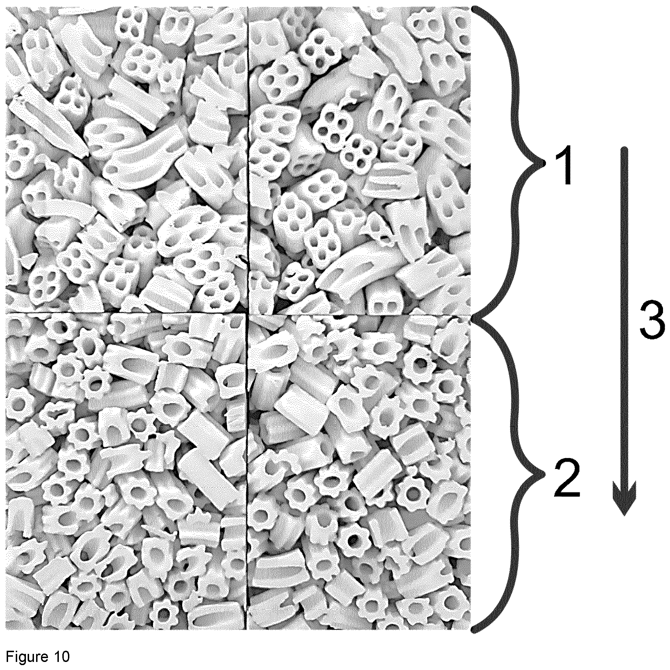

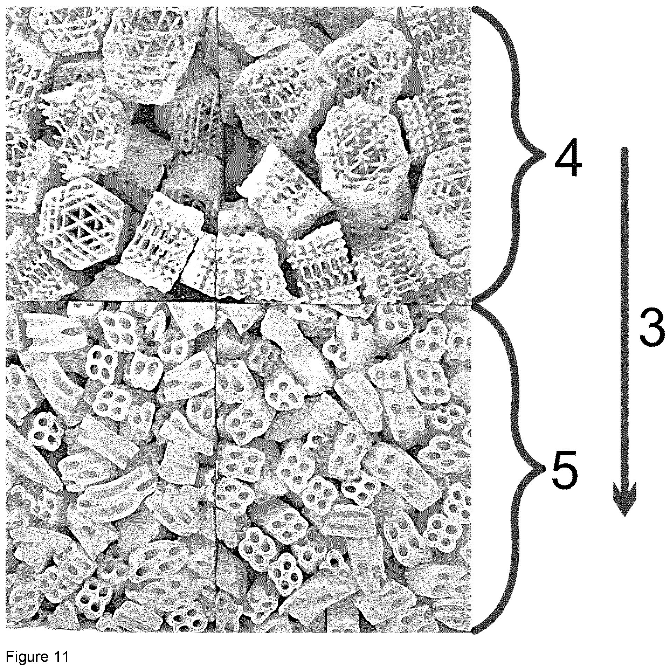

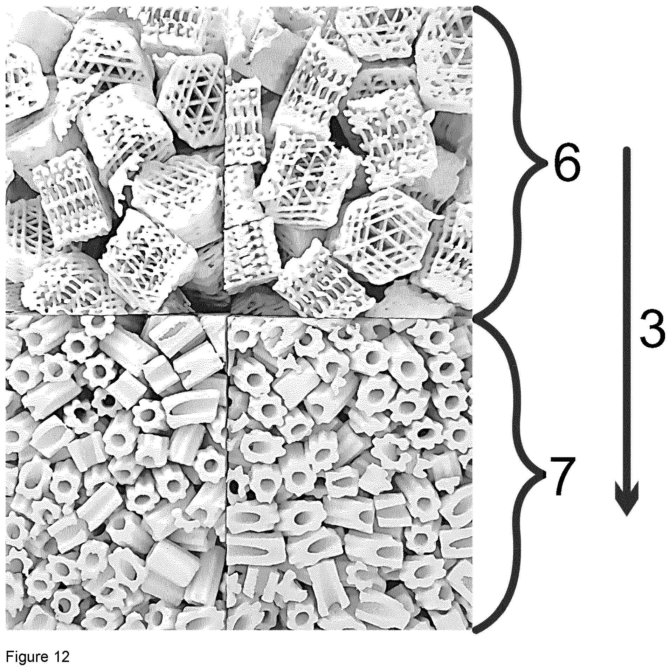

Figure 10 schematically illustrates an example of a cross-section of catalyst bed according to the invention, wherein a first layer (1) of randomly packed shaped catalyst bodies having Quattro shape with a geometric area ≥ 500 m²/L is followed by a second layer (2) of randomly packed shaped catalyst bodies having star-ring geometry with a geometric area < 450 m²/L. (3) denotes the direction of gas flow through the reactor. For illustrative clarity, layers of various shapes are depicted using photographs of plastic models of catalyst beds derived from tomographic scanning of actual catalyst beds. The same method has been used for Figure 11 and Figure 12.
Figure 11 schematically illustrates a further catalyst bed according to the invention, wherein a first layer (4) of randomly packed micro-extruded catalyst bodies with a geometric area ≥ 600 m²/L is followed by a second layer (5) of randomly packed shaped catalyst bodies having Quattro shape with a geometric area ≥ 500 m²/L. (3) denotes the direction of gas flow through the reactor.
Figure 12 schematically illustrates a further catalyst bed according to the invention, wherein a first layer (6) of randomly packed micro-extruded catalyst bodies with a geometric area ≥ 600 m²/L is followed by a second layer (7) of randomly packed shaped catalyst bodies having star-ring geometry with a geometric area < 450 m²/L. (3) denotes the direction of gas flow through the reactor.

The temperature in the first layer of shaped catalyst bodies in the catalyst bed rises in general from a lower temperature of from 280 °C to 390 °C, preferably from 280 to 350 °C at the beginning of the first layer to an upper temperature of from 350 °C to 450 °C, preferably from 350 to 400 °C at the end of the first and the beginning of the second layer in the catalyst bed.

The ignition temperature of the first layer of shaped catalyst bodies in the catalyst bed is in general in the range of from 280 °C to 350 °C, preferably from 295 to 320 °C. The ignition temperature is the temperature at which the catalyst becomes active in the oxidation of SO₂ to SO₃. At temperatures below the ignition temperature, the temperature rise across the catalyst bed is only due to external heating of the reactor. At temperatures above the ignition temperature, there is an additional pronounced rise in temperature across the catalyst bed due to the heat of reaction created by the oxidation. The temperature rise across the first layer of shaped catalyst bodies is in general in the range of from 10 °C to 120 °C, preferably from 40 to 70 °C.

The temperature in the second layer of shaped catalyst bodies in the catalyst bed rises in general from a lower temperature of from 350 °C to 450 °C, preferably from 350 to 400 °C at the end of the first layer and the beginning of the second layer to an upper temperature of from 450 °C to 630 °C, preferably from 500 to 630 °C at the end of the second layer in the catalyst bed.

In general, the geometric surface area per reactor volume of the first layer of shaped catalyst bodies is at least 10% higher than the surface area per reactor volume of the second layer of shaped catalyst bodies. Preferably, the surface area per reactor volume of the first layer is at least 20% higher, more preferably at least 30% higher than the surface area per reactor volume of the second layer.

In general, the geometric surface area of the first layer of shaped catalyst bodies is ≥ 500 m²/L, preferably ≥ 550 m²/L, more preferably ≥ 600 m²/L. In general, the geometric surface area of the first layer of shaped catalyst bodies does not exceed 1000 m²/L.

The geometric surface area of the second layer of shaped catalyst bodies is in general < 500 m²/L, preferably < 480 m²/L, more preferably < 460 m²/L.

The geometric surface area per reactor volume of the first layer is in general at least 15 % higher than that of the second layer.

Examples geometries of suitable catalyst bodies for the second layer are a star-ring geometry, cylinders, rings, gear-shapes, multi-lobed shapes, connected cylindrical rings and monolith type structures.

Preferably, the second layer comprises shaped catalyst bodies having star-ring geometry. Examples are 7 point star-ring catalysts, 6 point star-ring catalysts and 5 point star-ring, cylinders, rings, gear-shapes, multi-lobed shapes, connected cylindrical rings and monolith type catalysts. The preferred dimensions of the shape geometries used in the second layer would have an outer diameter between 6 mm and 15 mm in the case that a channel passes though the structure the preferred diameter of the channel would be 2 mm to 7 mm.

The first layer of shaped catalyst bodies can contain catalyst bodies having the shape of a cylinder having 4 hollow-cylindrical convexities (Quattro shape). Example Quattro shape catalyst bodies are described in WO2019170406. Preferred catalyst bodies of quattro shape geometry have a cross-section of between 11.5 mm and 15 mm more preferably between with channels of between 3.0 mm and 3.5 mm and a wall thickness between 1.0 mm and 2.0 mm with a wall between adjacent channels of between 1.0 mm and 2.0 mm. The length of the quattro shape geometry perpendicular to the cross-section is between 10 mm and 60 mm more preferably between 10 mm and 30 mm most preferably between 10 mm and 20 mm.

Preferably, the first layer of shaped catalyst bodies contains catalyst bodies prepared by 3D micro-extrusion (3D robocasting) technique.

More preferably, the first layer of shaped catalyst bodies contains catalyst bodies composed of alternating layers of linear spaced-apart parallel strands of the catalyst material.

Particularly preferably, catalyst bodies used in the first layer are composed of alternating layers of linear spaced-apart parallel strands, wherein the strands in alternating layers are oriented at an angle to one another, wherein the distance between inner spaced-apart parallel strands is larger than the distance between outer spaced-apart parallel strands in at least a part of the layers of the monolith.

In general, the strands are arranged orthogonal or oblique to each other in alternating layers. The orientation of the strands in each consecutive layer can be rotated by a certain angle, e.g. by 90°, 60°, 45° or 36°, clockwise or anti-clockwise, with respect to the preceding layer. Channels are formed in the monolith by superposition of individual layers of parallel strands having different orientations. The monoliths of the invention have smaller outer channels and larger inner channels resulting from the different spacing of the strands.

The micro-extrusion or 3D robocasting technique can be used with catalyst formulations which can be based on pastes that are currently used in standard extrusion techniques provided the particle size is small enough to pass the extrusion nozzle.

The 3D robocasting technique implies the extruding through one or more nozzles having a diameter of more than 0.5 mm, preferably more than 0.75 mm. Particularly preferably, the diameter of the nozzle should be in the range of from 0.75 mm to 2.5 mm, most preferably from 0.75 mm to 1.75 mm. The nozzle can have any desired cross-section, e.g. circular, elliptical, square, star-shaped, lobed. The maximum diameter is the largest diameter of a non-circular cross-section.

The robocasting process preferably employed according to the present invention can also be described as 3D fiber deposition (3DFD). The 3DFD method is an adaptive manufacturing method whereby a highly loaded paste is extruded by a moving nozzle. By computer controlling the movement of the extrusion head in x, y and z-direction, a porous material can be produced from the extruded fibers or strands layer by layer. After drying, the porous material can be thermally dried.

The main benefit of this technology is the degree of freedom with regard to the porous parameters (fiber thickness, inter-fiber distance and stacking design).

The typical flow chart for the 3DFD technology consists of the following subsequent steps:

The first step is to make sure that no large particles are present in the paste. Therefore the particle size of the starting material is checked. If too large particles are present the powder is sieved to obtain the desired particle size. As a rule of thumb, the largest particle (represented by the d99 value) should preferably be at least five times smaller than the nozzle size that will be used, more preferably at least ten times smaller.

In the following step the powder is mixed together with the solvent/diluent (e.g. water), if necessary binder and additives, thus obtaining a viscous paste. A good mixing to achieve a homogenous paste (minimizing agglomerates or the incorporation of air bubbles) is a prerequisite for a smooth and reproducible process. The powder loading of the functional material depends on the specific surface area, the particle size distribution and the powder morphology. Generally, as the particle size of the powder decreases, the viscosity of the paste will increase. Therefore the solid loading needs to be lowered for these powders. Apart from organic or, preferably, inorganic binder(s), rheology modifiers can be added to control the rheological behavior of the paste. In some cases a defoamer is also added to avoid air bubbles in the paste.

After mixing and de-airing, the paste is transferred to the paste reservoir and mounted on the 3DFD set-up. The nozzle, preferably either plastic or metal (below 200 µm), is attached to the paste reservoir. Paste extrusion is achieved e.g. by a displacement pump or a screw pump. During deposition, it might be necessary to control the drying conditions.

After drying at room conditions (or under controlled atmosphere and temperature), the 3DFD structure is reduced, if necessary. No calcining or sintering at temperatures above 1000 °C is necessary. The drying is preferably performed at a temperature in the range of from preferably 0 to 300°C, most preferably 20 to 110 °C. No treatment of the porous catalyst monolith precursor or porous catalyst monolith at temperatures above 1000 °C, preferably above 900 °C, more preferably above 750 °C, is performed.

The catalyst body of stacked fibers may shrink due to the heat treatment. This shrinkage could be in the range of 5-50% of the printing size of the "green" catalyst body.

The catalyst body of stacked catalyst fibers is three-dimensionally structured by depositing the extruded fibers in regular, recurring stacking pattern (periodically structured catalyst), to form a three-dimensionally structured porous catalyst precursor.

The points where the direction of the extrudate is changed or the layer in which the extrudate is deposited may have a larger diameter than the desired strand diameter. Though undesired, the diameter of an individual strand may also change in a parallel section of the shaped body due to a change in the printing speed.

The fibers or strands preferably have a thickness of 0.2 mm to 2.5 mm, more preferably of 0.75 mm to 2 mm, most preferably 0.75 mm to 1.75 mm.

They are preferably spatially separated from each other by a smaller first (primary) and at least one larger second (secondary) distance, wherein the first distance is determined by the formula: m₁=b^{∗}d wherein (m₁), the primary distance between the fibers is determined by the strand diameter b multiplied by a factor d, wherein d is from 0.3 to 2, more preferably from 0.5 to 1.5, most preferably from 0.5 to 1. The larger secondary distances are calculated by the formula: m₂= m₁^{∗}e wherein e is from 1.2 to 5, preferably 1.5 to 4, more preferably form 2 to 4.

In one embodiment, the parallel strands in each layer are partial strands deposited in a continuous manner as part of one single individual strand, the one single individual strand having corners and changing its direction in the plane of the layer.

The catalyst bodies are generally subjected to a drying step after extrusion. Here, the type of oven is not restricted further. It is possible to use, for example, stationary convection ovens, rotary tube ovens or belt ovens. The duration of drying is generally from 0.5 to 20 hours and the temperature is generally from 50 to 200°C.

The shaped catalyst bodies are generally subjected to a calcination step after drying. Here, the type of oven is not restricted further. It is possible to use, for example, stationary convection ovens, rotary tube ovens or belt ovens. The duration of calcination is generally from 0.5 to 20 hours and the temperature is generally from 200 to 800°C.

The shaped catalyst bodies of the different layers are made of a catalyst material comprising vanadium on a support material. The catalyst material may further comprise one or more alkali metals.

The catalysts can comprise not only vanadium but also alkali metal compounds, especially potassium compounds but optionally also sodium compounds and/or cesium compounds, and also sulfate. Porous oxides such as silicon dioxide, SiO₂, are used as support for the abovementioned components.

As inert support materials, use is made of, in particular, porous materials based on SiO₂. Here, it is possible to use synthetic variants of SiO₂ and also natural forms of SiO₂ or mixtures thereof.

The content of vanadium, calculated as V₂O₅, is generally from 3 to 10% by weight, the content of alkali metals (M), calculated as M₂O, is from 5 to 30% by weight, with the molar ratio of alkali metal to vanadium (M/V ratio) usually being in the range from 2 to 6. The content of potassium, calculated as K₂O, is usually in the range from 6 to 15% by weight and the content of sulfate is in the range from 12 to 30% by weight. In addition, it is possible for further elements such as chromium, iron, aluminum, phosphorus, manganese and boron to be comprised.

A preferred support material comprises naturally occurring diatomaceous earth. The support material particularly preferably comprises at least two different naturally occurring, uncalcined diatomaceous earths which differ in terms of the structure type of the diatoms on which they are based, with the various structure types being selected from plate-shaped, cylindrical and rod-shaped structure types. Preferred diatomaceous earths are disclosed in WO 2011/128841A1. The catalysts produced therefrom have a particularly good mechanical stability.

Bed reactors (see, for example, "H. Müller, Sulfuric Acid and Sulfur Trioxide in Ullmann's Encyclopedia of Industrial Chemistry, Wiley-VCH, 2012"; DOI: 10.1002/14356007.a25_635) are typically used as reactors. These bed reactors have a plurality of reaction beds in which SO₂ is brought into contact with shaped catalyst bodies. The reactor typically comprises from 1 to 6, usually from 3 to 5, beds. The bed reactors generally behave approximately adiabatically, i.e. the heat liberated in the oxidation of SO₂ to SO₃ largely heats the reaction gas. The exothermic oxidation of SO₂ to SO₃ is limited by thermodynamic equilibrium which is shifted in the direction of the starting materials with increasing temperature. After passage through a bed, the reaction gas is therefore cooled, for example in suitable heat exchangers, before being fed to the next bed. Furthermore, there are processes in which the SO₃ formed is largely removed from the reaction gas, for example by absorption in concentrated sulfuric acid, between two beds in order to increase the conversion of remaining SO₂ in the subsequent beds.

In a preferred embodiment of the invention, the feed gas mixture is passed through two or more catalyst beds of shaped catalyst bodies, wherein the gas mixture is cooled between two subsequent catalyst beds.

In a further preferred embodiment, the feed gas mixture is passed through two or more catalyst beds of shaped catalyst bodies, wherein the gas mixture is contacted with sulfuric acid between two subsequent catalyst beds.

In further embodiments, more than one catalyst bed of the reactor (or bed of the bed reactor) comprises a first and a second layer of shaped catalyst bodies, the first layer having a higher geometric surface area per reactor volume than the second layer.

In a further embodiment, the first catalyst bed has a dust protection layer upstream the first layer of shaped catalyst bodies. In a particularly preferred embodiment, the dust protection layer contains shaped bodies having a geometric surface per reactor volume of < 400 m²/L.

Suitable shaped bodies for the dust protection layer are described in EP 3431178 A1. They have an annular or cylindrical shape with at least three bulges, an outer diameter of at least 26 mm, a length in the range of 5 to 60 mm and an inner hole with a diameter in the range of 8 to 20 mm. preferably, the shaped bodies have from 6 to 15 bulges, for example 7 bulges, and the ratio of the hole diameter to the outer diameter is from 0,3 to 0,8.

The concentration of SO₂ in the reaction gas before the latter enters the first bed is generally from 2 to 20% by volume; depending on SO₂ source, it is typically in the range from 5 to 15% by volume. The concentration of O₂ in the reaction gas before the latter enters the first bed is likewise generally 2-20% by volume; depending on SO₂ source, it is typically in the range from 5 to 15% by volume. The volume flows are generally from 10 000 to 500 000 standard m³/h, typically from 30 000 to 350 000 standard m³/h. The diameter of the reactors is typically from 2 to 15 m, normally from 3 to 10 m. The volume of the catalytic bed per bed is generally from 10 to 500 m³, usually from 20 to 350 m³. The height of the catalytic bed per bed is generally from 0.3 to 3 m, typically from 0.5 to 2.5 m. The space velocity of gas in standard m³/h, based on the catalyst volume in m³ (GHSV), is generally from 100 to 5000 h⁻¹, usually from 500 to 2500 h⁻¹. The flow is typically in the laminar range, and the Reynolds number of the flow in the bed is generally from 10 to 1000, typically from 30 to 500. The pressure drop over the bed in a bed is generally from 2 to 100 mbar, typically from 5 to 50 mbar.

The invention is further illustrated by the following examples.

### Examples:

70 kg of monolithic micro-extruded cesium-doped vanadium catalyst shapes are placed in the first bed, with a volume of 1 m³, of a four bed converter with a 1.80 m diameter. The remaining volume below the micro-extruded shapes is filled with 450 kg of 7-point star-ring catalyst, which are not cesium doped. The ignition temperature of the reactor bed decreases from 400 °C to 295 °C leading to an increase in total plant capacity from 500 kg/h of sulphur burning capacity to 520 kg/h corresponding to an increase of 4% of total capacity. At the same time the temperature difference between the inlet temperature and outlet temperature of the reactor bed increases from 145°C to 160°C corresponding to an increase in conversion of 10% in the individual reactor bed.

### Geometric Surface Area:

The measurement of the geometric surface area per reactor volume of the catalyst of the individual shapes was carried out on a GE Phoenix nanotom m Computed Tomography (CT) instrument with a Voxel size of 36,667 µm, a voltage of 150 µV, a current of 80 µA and 1500 pictures in 360°. The geometric surface area was determined through a post processing of the data using VGSTUDIO MAX software from Volume Graphics.

The measurement of the geometric surface area per mass of the catalyst of the individual shapes was carried out on a GE Phoenix nanotom m Computed Tomography (CT) instrument with a Voxel size of 24,99 µm, a voltage of 150 µV, a current of 80 µA and 1500 pictures in 360°. The geometric surface area was determined through a post processing of the data using VGSTUDIO MAX software from Volume Graphics.

**Table 1: Geometric surface area measurement per reactor volume**

| | Star-ring | Quattro | Mirco-extruded shape |
|---|---|---|---|
| Geometric surface area to reactor volume [m²/L] | 439 | 520 | 692 |

**Table 2: Geometric surface area measurement per mass**

| | Star-ring | Quattro | Mirco-extruded shape |
|---|---|---|---|
| Geometric surface area to mass [m²/g] | 0.98 | 1.20 | 1.73 |

### Ignition temperature:

**Table 3: decrease in ignition temperature for Cs-type catalyst**

| | Star-ring | Quattro | Mirco-extruded shape |
|---|---|---|---|
| Ignition temperature [°C] | 340 | 330 | 296 |
| Active Range [°C] | 370-630 | 360-630 | 310-630 |

## Claims

1. A process for the oxidation of sulfur dioxide to sulfur trioxide, wherein a feed gas mixture comprising oxygen and sulfur dioxide is passed at a temperature in the range of from 280°C to 650°C through one or more catalyst beds of shaped catalyst bodies made of a catalyst material comprising vanadium on a support material, wherein at least one catalyst bed comprises at least two different layers of randomly packed shaped catalyst bodies of the catalyst material, a first layer having a higher geometric surface area per reactor volume than a second layer, the first layer being placed upstream to the second layer with respect to the direction of the gas flow.

2. The process according to claim 1, wherein the first catalyst bed has a dust protection layer upstream the first layer of shaped catalyst bodies.

3. The process according to claim 2, wherein the dust protection layer contains shaped bodies having a geometric surface per reactor volume of < 400 m2/L.

4. The process according to any one of claims 1 to 3, wherein the geometric surface area per reactor volume of the first layer of shaped catalyst bodies is at least 10% higher than the surface area per reactor volume of the second layer of shaped catalyst bodies.

5. The process according to any one of claims 1 to 4, wherein the geometric surface area of the first layer of shaped catalyst bodies is ≥ 500 m2/L.

6. The process according to any one of the claims 1 to 5, where in the geometric surface area per reactor volume of the first layer is at least 15% higher than the geometric surface area per reactor volume of the second layer.

7. The process according to any one of claims 1 to 6, wherein the first layer of shaped catalyst bodies contains catalyst bodies prepared by 3D micro-extrusion (3D robocasting) technique.

8. The process according to any one of claims 1 to 7, wherein the first layer of shaped catalyst bodies contains catalyst bodies composed of alternating layers of linear spaced-apart parallel strands of the catalyst material.

9. The process according to any one of claims 1 to 8, wherein the second layer comprises shaped catalyst bodies having star-ring geometry.

10. The process according to any one of claims 1 to 9, wherein the catalyst material further comprises at least one alkali metal.

11. The process according to any one of claims 1 to 10, wherein the feed gas mixture is passed through two or more catalyst beds of shaped catalyst bodies, wherein the gas mixture is cooled between two subsequent catalyst beds.

12. The process according to any one of claims 1 to 11, wherein the feed gas mixture is passed through two or more catalyst beds of shaped catalyst bodies, wherein the gas mixture is contacted with sulfuric acid between two subsequent catalyst beds.

13. The process according to any one of claims 1 to 12, wherein more than one catalyst bed comprises a first and a second layer of shaped catalyst bodies, the first layer having a higher geometric surface area per reactor volume than the second layer.

14. A reactor for the oxidation of sulfur dioxide to sulfur trioxide having a gas flow inlet and a gas flow outlet, the reactor comprising one or more catalyst beds of shaped catalyst bodies made of a catalyst material comprising vanadium on a support material, wherein at least one catalyst bed comprises at least two different layers of randomly packed shaped catalyst bodies of the catalyst material, a first layer having a higher geometric surface area per reactor volume than a second layer, the first layer being placed upstream to the second layer with respect to the direction of the gas flow passing from the gas flow inlet to the gas flow outlet.

15. The reactor according to claim 14, wherein the geometric surface area of the first layer of shaped catalyst bodies is ≥ 500 m2/L.

16. The reactor according to any claim 14 or 15, wherein the geometric surface area of the second layer of shaped catalyst bodies is < 500 m2/L.

17. The reactor according to any one of claims 14 to 16, wherein the first layer of shaped catalyst bodies contains catalyst bodies prepared by 3D Fiber Deposition (3D robocasting) technique.

18. The reactor according to any one of claims 14 to 17, wherein the first layer of shaped catalyst bodies contains catalyst bodies composed of alternating layers of linear spaced-apart parallel strands of the catalyst material.

19. The reactor according to any one of claims 14 to 18, wherein the second layer comprises shaped catalyst bodies having star-ring geometry.

20. The reactor according to any one of claims 14 to 19, wherein the catalyst material further comprises at least one alkali metal.

21. The reactor according to any one of claims 14 to 20, wherein the reactor is a bed reactor comprising two or more catalyst beds of shaped catalyst bodies.

22. The reactor according to any one of claims 14 to 21, wherein the first catalyst bed has a dust protection layer upstream the first layer of shaped catalyst bodies.
